Europäisches Patentamt

(19) **European Patent Office**

**Office européen des brevets**

(11) Publication number: **0 072 109**
A2

# (12) EUROPEAN PATENT APPLICATION

(21) Application number: **82303721.3**

(22) Date of filing: **15.07.82**

(51) Int. Cl.³: **F 02 B 31/00, F 02 F 1/42,
F 02 P 5/10**

(30) Priority: **03.08.81 US 291054**

(43) Date of publication of application: **16.02.83**
**Bulletin 83/7**

(84) Designated Contracting States: **DE FR GB IT**

(71) Applicant: **GENERAL MOTORS CORPORATION,
General Motors Building 3044 West Grand Boulevard,
Detroit Michigan 48202 (US)**

(72) Inventor: **Wyczalek, Floyd Anthony, 155 S. Williamsbury
Road, Birmingham Michigan 48010 (US)**

(74) Representative: **Haines, Arthur Donald et al, General
Motors Limited Patent Section P.O. Box 242 Delaware
Drive, Tongwell Milton Keynes MK15 8HA (GB)**

(54) Enchanced combustion internal combustion engine and method.

(57) The rate of combustion is increased and combustion conditions are enhanced by a spark ignition internal combustion engine system 10 involving creating a relatively rapid swirling of a charge 32 of air-fuel mixture in a combustion chamber of the system and igniting the mixture with an arc of extended duration that continues to ignite new portions of the swirling mixture during revolution of the swirling charge.

1

## ENHANCED COMBUSTION INTERNAL COMBUSTION ENGINE AND METHOD

This invention relates to internal combustion engines and particularly to methods and means for ignition and combustion of combustible mixture in the combustion chambers of such engines. In its more particular aspects, the invention relates to means and methods for enhancing combustion in the combustion chambers of internal combustion engines.

It is known in the art to cause swirl of combustible mixture in the combustion chambers of a spark ignition internal combustion engine to obtain improved mixing and combustion of the charge.

When compared with engines having an absence of swirl producing inlet ports or other means for creating in-cylinder swirl, the use of suitable swirl producing means for the above-mentioned purpose, such as, for example, an appropriately shaped swirl inlet port, has been found to provide the following benefits.

1.   Reduced ignition lag.
2.   Increased burn rate.
3.   Reduced requirement for spark advance.
4.   Extended exhaust gas recirculation tolerance.
5.   Extended lean mixture tolerance.
6.   Reduced fuel octane requirement.
7.   Improved cycle-to-cycle combustion repeatability giving improved driveability of vehicles in which such engines are installed.

Recognizing the advantages of such benefits in spark ignition engines, the operation of which is adversely affected by limiting emission regulations, it is not surprising that there is presently substantial interest in the application of mixture swirl producing means to automotive spark ignition engines.

The present invention provides a combustion system for spark ignited internal combustion engines which includes the advantages of the known swirl combustion systems and further provides means by which combustion is further enhanced. This is accomplished by combining with an engine arrangement providing adequate in-cylinder swirl, a spark ignition system of the arc restrike or continuous arc type in which ignition, once begun, is continued for a predetermined period of, preferably, the full combustion period up to the time of one full revolution of the swirling combustion chamber mixture. By this means, when a swirl field of adequate rotational speed is provided, the burning flame front of mixture developed by ignition and progressing combustion moves with the swirling mixture around the center of the combustion chamber in an expanding combustion cloud or flame front in which fresh mixture is being continuously ignited as it passes the spark plug until an extended arc or complete circle of burning mixture results. As a consequence, burning of the mixture takes place over a greatly extended area of the combustion chamber and in a very short interval resulting in further increased burn rates over ordinary swirl flow systems. Further improvements in tolerance of exhaust gas recirculation and lean mixtures as well as further reductions in fuel octane requirement are also anticipated.

These and other features and advantages of the invention will be more fully understood from the following description of a preferred embodiment taken together with the accompanying drawings, in which:

Figure 1 is a fragmentary lower plan view of the cylinder head portion of an engine having an intake system including combustion enhancing means in accordance with the invention, and

Figure 2 is a fragmentary transverse cross-sectional view through a cylinder of the engine taken generally in the plane indicated by the line 2-2 of Figure 1.

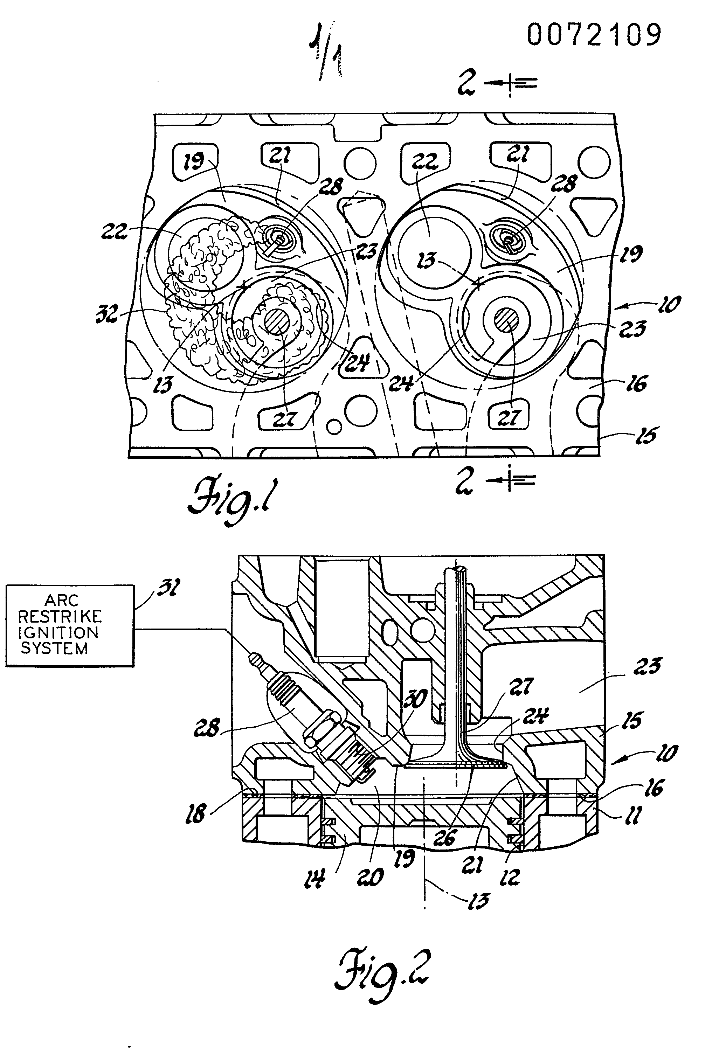

Referring now in detail to the drawings. Numeral 10 generally indicates an internal combustion engine of the spark ignition type having swirl generating inlet ports. Engine 10 includes a cylinder block 11 shown in Figure 2 and defining a plurality of cylinders 12 having axes 13 and in which there are reciprocably disposed pistons 14. A cylinder head 15 is provided, having a lower surface 16 seated on an upper surface 18 of the cylinder block to close the ends of the cylinders.

The lower surface of the cylinder head is provided with a plurality of combustion chamber recesses 19. These are aligned one with each of the cylinders in the cylinder block and cooperate with the pistons to form enclosed variable volume combustion chambers 20 centered generally on the cylinder axes 13 and having peripheries 21 near the edges of the cylinders 12. For each of the cylinders, the cylinder head is provided with an exhaust port, not shown, opening to its respective combustion chamber to receive exhaust gases therefrom and capable of being closed by an exhaust valve 22 in conventional fashion.

A swirl generating inlet port 23 is also provided in the cylinder head for each of the engine cylinders. Each port 23 opens to its respective combustion chamber recess at an outlet opening throat portion 24 adapted to be closed by the head 26 of an inlet valve 27. The exhaust and inlet port openings are located adjacent one another in the combustion chamber recesses with a spark plug 28 located to one side of and between the two port openings at one side of each combustion chamber recess, a suitable threaded opening 30 being provided for the purpose of receiving the spark plug.

Connected externally to the spark plug is an arc restrike ignition system indicated by numeral 31. System 31 may be of any suitable type which permits the continuous arcing or restriking of the arc in the spark plug over a predetermined or adjustable extended period beginning with the point of initial energizing of the spark plug and terminating at a predetermined period thereafter. Among examples of extended time, ignition systems which might be used for this purpose are those shown in United States patents 3,892,219 Preiser et al and 3,945,362 Neuman et al both assigned to the assignee of the present invention.

In operation the engine 10 is operable on a conventional four-stroke cycle including intake compression, expansion and exhaust strokes of each piston.

On the intake stroke, a premixed combustible charge of air-fuel mixture, which may include excess air or other diluents such as recirculated exhaust gases, is delivered to the inlet port 23 and drawn into the combustion chamber 20 by the downward motion of the piston. The spiral entry configuration of the inlet port and its orientation with respect to the combustion chamber are such as to cause the entering charge of air-fuel mixture to form a swirl pattern within the combustion chamber. The swirling mixture generally describes a circular motion about the central axis 13 in a counterclockwise direction from the inlet port to the spark plug and across the exhaust valve back to the inlet port, as viewed from the bottom of the combustion chamber, as seen in Figure 1.

This swirling action persists during the compression stroke and, depending upon the shape of the combustion chamber, may be somewhat accelerated or decelerated as the piston approaches its top dead center position near the end of the compression

stroke. ... ... point the rate of swirl in the
combustion chamber is preferably relatively high,
with a swirl ratio of at least two, that is a rate
of two revolutions of the mixture within the combustion chamber for each revolution of the engine
crankshaft (two piston strokes) during at least a
substantial portion of the operating conditions
usually encountered by the engine. Some of the
advantages of the invention may be obtained, however,
with lower swirl ratios not less than one.
Considering a combustion period as normally extend-
ing for about 50 degrees of crank rotation, a swirl
ratio of one corresponds to about one-seventh of a
revolution of the charge during each combustion
period. It is thought that higher swirl rates
exceeding one revolution of the charge during the
combustion period would be even more beneficial.

As the piston nears top dead center on
the compression stroke, the ignition system energizes the spark plug, igniting the mixture as it
passes the location of the spark plug gap intermediate the center and periphery of the combustion
chamber. The ignition system is capable of maintaining the arc or, if it goes out, of restriking
the arc as necessary to maintain a substantially
continuous ignition arc for an extended period. In
this case the period during which the ignition arc
is maintained is preferably equal to the combustion
period or to the time required for one revolution of
the swirling mixture in the combustion chamber,
whichever is shorter. However, maintenance of the
arc for substantially shorter periods should also be
of benefit. For example, an ignition period equal
to one half the preferred period should be effective

to provide the advantages of the invention, at least in part.

As ignition continues, the swirling flow of combustible mixture past the spark plug gap continues to ignite new portions of the charge of swirling mixture. Concurrently, the previously ignited portions move in a counterclockwise direction around the center of the combustion chamber while the flame front expands radially inwardly and outwardly from the ignited portions. The anticipated appearance of the burning and swirling flame front as it approaches a position of swirl nearly a complete revolution from the time of initial ignition is shown by the combustion cloud configuration indicated by numeral 32 in Figure 1 of the drawing.

With the extended flame front illustrated, resulting from the combination of extended ignition and swirling mixture flow in the combustion chamber, combustion of the air-fuel mixture occurs at a substantially increased rate of burning over that which occurs in a swirling mixture flow field ignited by a single relatively short spark ignition arc. Thus it is possible to further reduce spark advance and fuel octane requirements while being capable of operating with additional amounts of exhaust gas recirculation or leaner mixtures.

The extended ignition period is preferably terminated at the end of the combustion period or whenever the mixture has made one continuous revolution in the combustion chamber, at which time the piston will be moving downwardly on an expansion stroke so as to deliver power to the engine crankshaft not shown. Subsequently, when the piston moves upwardly on the exhaust stroke, the exhaust valve is opened allowing the burned gases to be forced out of the combustion chamber, after which the intake valve is opened and the piston again moves downwardly on the intake stroke drawing in a new air-fuel mixture charge and repeating the process.

While the invention has been described by reference to a specific preferred embodiment chosen for purposes of illustration, it should be understood that numerous variations and changes could be made within the scope of the inventive concepts described. Accordingly, it is intended that the invention not be limited by the described embodiment but that it have the full scope permitted by the language of the following claims.

Claims

1.    An enhanced combustion internal combustion engine (10) in which a combustible mixture is caused to swirl within a variable volume combustion chamber (20) and is ignited with ignition means (28), characterised in that said engine comprises

working means (12, 14, 15) defining said variable volume combustion chamber (20) having a central axis (13) and a periphery (21) surrounding said axis and operable on a working cycle including sequential compression and expansion steps,

means (23, 24, 26, 27) for admitting a charge of combustible fluid mixture to the combustion chamber (20) prior to the compression step and for forming a swirl field of mixture that persists after each compression step and swirls generally about the central axis (13) within the chamber periphery (21),

ignition means (28) located in the swirl field intermediate the central axis (13) and the periphery (21) of the combustion chamber (20) and operative to ignite the mixture therein near the end of each compression step,

said swirl forming means (23, 24, 26, 27) being operative to cause a rotational speed of the swirl field at the end of each compression step of at least one revolution over the period of one cycle of compression and expansion of the combustion chamber (20), and

said ignition means (28) being operative to continue each step of ignition of the swirling charge for a period of at least the shorter of one half revolution of the swirl field and one half the combustion period of the mixture in the combustion chamber, whereby combustion is initiated and enhanced on an expanding front extending arcuately downstream around the combustion chamber interior.

2.   An enhanced combustion internal combustion engine according to claim 1, <u>characterised in that</u> said swirl forming means (23, 24, 26, 27) is operative during a substantial portion of engine operation to cause a swirl field rotational speed at the end of each compression step which exceeds two revolutions per cycle of combustion chamber compression and expansion.

3.   An enhanced combustion internal combustion engine according to claim 1 or 2, <u>characterised in that</u> said ignition means (28) is operative to continue each ignition step for a period equal to the shorter of one revolution of the swirl field and the combustion period of the combustion chamber mixture.

4.   A method for producing enhanced combustion in an internal combustion engine, <u>characterised in that</u> said method comprises the steps of providing in the expandable combustion chamber (20) of a reciprocating piston type internal combustion engine (10) a swirl field of compressed combustible fluid mixture swirling generally around a central axis (13) within the chamber periphery (21), and igniting the swirling mixture at a location spaced between the combustion chamber periphery (21) and the central axis (13), said swirl field having a rotational speed of at least one revolution for each compression and expansion cycle of the combustion chamber and said ignition step being continued during at least the shorter of one half revolution of the swirl field and one half the combustion period of the mixture in the chamber whereby combustion is initiated and continues on an expanding front extending arcuately around the combustion chamber interior.

5. A method according to claim 4, characterised in that the rotational speed of said swirl field is in excess of two revolutions for each compression and expansion cycle of the combustion chamber.

6. A method according to claim 4 or 5, characterised in that said ignition step is continued for at least the shorter of one revolution of the swirl field and the combustion period of the combustion chamber mixture.

Fig.1

ARC RESTRIKE IGNITION SYSTEM

Fig.2